# EUROPÄISCHE PATENTANMELDUNG

(11) **EP 4 050 627 A1**
(43) Veröffentlichungstag der Anmeldung: **31.08.2022**
(21) Anmeldenummer: 21202724.7
(22) Anmeldetag: 14.10.2021
(51) Int. Cl.: H01F 37/00, H01F 3/10, H01F 27/38

(54) **VORRICHTUNG ZUR LEISTUNGSFAKTORKORREKTUR EINES ELEKTRONISCHEN BETRIEBSMITTELS AN EINEM WECHSELSPANNUNGSANSCHLUSS**

(30) Priorität: 26.02.2021 DE 102021001066
(71) Anmelder: Finepower Gmbh, 85737 Ismaning (DE)
(72) Erfinder: Heiland, Georg, 85737 Ismaning (DE); Brenner, Andreas, 80797 München (DE); Jäger, Karl, 86971 Peiting (DE); Fuhr, Tobias, 86633 Neuburg (DE); Baumgartner, Florian, 81541 München (DE)
(74) Vertreter: Leinweber & Zimmermann

(57) **Zusammenfassung**

Vorgeschlagen wird eine Vorrichtung zur Kopplung der Speicherinduktivitäten einer Leistungsfaktorkorrekturschaltung.

Dabei werden erfindungsgemäß zumindest drei elektrische Leiter um eine gemeinsame magnetische Kerngeometrie gewickelt, um jeweils eine Induktivität auszubilden. Damit kann beispielsweise eine magnetische Kopplung der drei Speicherinduktivitäten einer Leistungsfaktorkorrektur für den Anschluss an ein dreiphasiges öffentliches Versorgungsnetz realisiert werden. In einer günstigen Ausgestaltung der vorgeschlagenen Vorrichtung nach dem Hauptanspruch sind zumindest 2 Wicklungen an einem elektrischen Anschlusspunkt elektrisch miteinander verbunden und sind auf einem gemeinsamen Kernabschnitt aufgebracht, sodass sich ein gemeinsamer magnetischer Hauptflusspfad ergibt. Damit kann auf vorteilhafte Weise eine gekoppelte Induktivität in einer Leistungsfaktorkorrekturschaltung mit zumindest 2 parallel geschalteten Hochsetzstell-Schaltungen realisiert werden, welche in Bezug auf die Schaltfrequenz in einem elektrischen Phasenwinkel zueinander betrieben werden (sogenannter "interleaved"-Betrieb), wobei die Leistungsfaktorkorrekturschaltung an eine Phase eines öffentlichen Versorgungsnetzes angeschlossen werden kann. Beispielsweise kann als Kerngeometrie erfindungsgemäß eine ringförmige Geometrie verwendet werden, oder aber auch eine topfförmige Geometrie mit einem Innenschenkel, wie beispielsweise eine PQ-Geometrie oder eine PM-Geometrie.

## Beschreibung

Die Erfindung betrifft eine Vorrichtung zur Leistungsfaktorkorrektur eines elektronischen Betriebsmittels an einem Wechselspannungsanschluss.

Leistungsfaktorkorrekturschaltungen (engl. Power Factor Correction, PFC) sind notwendig zur Versorgung elektrischer Verbraucher aus öffentlichen Stromnetzen.

PFC-Schaltungen beinhalten dabei Leistungshalbleiter, die mit einigen 10 Kilo- bis mehreren Megahertz Schaltfrequenz betrieben werden können. Dabei werden die Leistungshalbleiter mit einer Speicherdrossel üblicherweise zu einem Hochsetzsteller verschaltet, der die Netz-Wechselspannung in eine Gleichspannung umwandelt, wobei die Form des Eingangsstroms der Form der Eingangsspannung durch geeignete Ansteuerverfahren der Halbleiter angepasst wird.

In mehrphasigen Netzen, wie beispielsweise dem üblichen dreiphasigen öffentlichen Stromnetz, sind dementsprechend drei Hochsetzstellerschaltungen mit jeweils einer Speicherdrossel erforderlich. Oftmals werden diese drei Hochsetzstellerschaltungen derart miteinander verbunden und angesteuert, dass sich eine sogenannte 6-pulsige Brückenschaltung ergibt. Insbesondere in Anwendungsgebieten wo hohe Leistungsdichten gefordert sind und/oder ein starker Kostendruck vorhanden ist, wie etwa im Bereich der Elektromobilität, sind der technischen Realisierung solcher PFC-Betriebsmittel bei einem Aufbau mittels separater Komponenten für jede Phase Grenzen hinsichtlich der Volumen- und Gewichtsminimierung gesetzt, welche durch die Netzfrequenz sowie die am Markt etablierten Bauformen der Halbleiter und magnetischen Komponenten definiert sind.

Ein allgemein bekannter Lösungsansatz zur Erhöhung der Leistungsdichte solcher PFC-Schaltungen nutzt neuartige Halbleitertechnologien mit hoher Bandlücke (sog. "Wide-Bandgap", kurz: "WBG"), wie Silizium-Carbid (SiC) oder Gallium-Nitrid (GaN), welche wesentlich höhere Betriebsfrequenzen ermöglichen und in wesentlich kleineren Bauformen am Markt vorhanden sind. Jedoch sind diese Halbleitertechnologien wesentlich teurer in der Herstellung, sodass eine Erhöhung der Leistungsdichte auf diesem Weg mit wesentlich höheren Kosten verbunden ist.

Die Speicherdrosseln bestehen aus einem magnetischen Material, welches mit einem elektrischen Leiter umwickelt wird. Bei einem Stromfluss durch den elektrischen Leiter wird im magnetischen Material ein magnetischer Fluss erzeugt, der über die physikalischen Eigenschaften des magnetischen Materials Verlustwärme erzeugt, welche proportional mit der Strombelastung ansteigt. Dabei steigen die Verluste zusätzlich proportional zur Frequenz des Stromflusses. Insbesondere bei Einsatz der neuartigen Halbleitertechnologien werden dann durch höhere Betriebsfrequenzen auch höhere Verluste in den Speicherdrosseln erzeugt.

Eine bereits bekannte Möglichkeit zur Reduktion der Verluste und Erhöhung der Leistungsdichte von Betriebsmitteln zur Leistungsfaktorkorrektur wird in der DE102014206469A1 offenbart. Dabei wird eine Vorrichtung beansprucht, die 2 Spulen auf einer gemeinsamen Kerngeometrie beinhaltet. Damit kann die Vorrichtung in einer einphasigen Leistungsfaktorkorrektur eingesetzt werden, wobei durch die magnetische Kopplung der beiden Spulen eine Flussreduktion sowohl bezogen auf die Netzfrequenz als auch bezogen auf die Schaltfrequenz und dadurch kleinere Bauformen ermöglicht werden. Diese Vorrichtung ist jedoch nicht für eine dreiphasige Anwendung geeignet, da hierfür zumindest 3 Spulen notwendig sind.

Aufgabe der vorgeschlagenen Erfindung ist es daher, die Leistungsdichte und Effizienz von PFC-Betriebsmitteln zu erhöhen, welche auch für einen mehrphasigen Netzanschluss geeignet sind.

Eine Lösung dieser Aufgabe wird durch eine Vorrichtung mit den Merkmalen des Anspruchs 1 erreicht. Weitere günstige Ausführungsformen ergeben sich aus den Unteransprüchen.

Vorgeschlagen wird eine Vorrichtung zur Kopplung der Speicherinduktivitäten einer Leistungsfaktorkorrekturschaltung.

Dabei werden erfindungsgemäß zumindest drei elektrische Leiter um eine gemeinsame magnetische Kerngeometrie gewickelt, um jeweils eine Induktivität auszubilden. Damit kann beispielsweise eine magnetische Kopplung der drei Speicherinduktivitäten einer Leistungsfaktorkorrektur für den Anschluss an ein dreiphasiges öffentliches Versorgungsnetz realisiert werden. Durch die zueinander gleichmäßig verschobenen Phasenlagen der einzelnen Phasenspannungen eines öffentlichen Versorgungsnetzes kompensieren sich die durch die einzelnen Speicherinduktivitäten erzeugten magnetischen Felder in der gemeinsamen Kerngeometrie zumindest teilweise. Dadurch resultiert ein im Vergleich zu magnetisch nicht gekoppelten Speicherinduktivitäten geringerer magnetischer Fluss, wodurch die Verluste verringert und damit die Effizienz der Leistungsfaktorkorrektur erhöht werden. Zudem können dadurch die geometrischen Abmessungen, welche durch die Speicherinduktivitäten eingenommen werden, bei gleich großen resultierenden Flussdichten im Vergleich zu magnetisch nicht gekoppelten Induktivitäten verkleinert werden.

In einer günstigen Ausgestaltung der vorgeschlagenen Vorrichtung nach dem Hauptanspruch sind zumindest 2 Wicklungen an einem elektrischen Anschlusspunkt elektrisch miteinander verbunden oder durch eine außerhalb der Vorrichtung befindliche elektronische Schaltung miteinander verbindbar und sind auf einem gemeinsamen Kernabschnitt aufgebracht, sodass sich ein gemeinsamer magnetischer Hauptflusspfad ergibt. Damit kann auf vorteilhafte Weise eine gekoppelte Induktivität in einer PFC-Schaltung mit zumindest 2 parallel geschalteten Hochsetzstell-Schaltungen realisiert werden, welche in Bezug auf die Schaltfrequenz in einem elektrischen Phasenwinkel zueinander betrieben werden (sogenannter "interleaved"-Betrieb), wobei die PFC-Schaltung an eine Phase eines öffentlichen Versorgungsnetzes angeschlossen werden kann. Beispielsweise kann als Kerngeometrie erfindungsgemäß eine ringförmige Geometrie verwendet werden, oder aber auch eine topfförmige Geometrie mit einem Innenschenkel, wie beispielsweise eine PQ-Geometrie oder eine PM-Geometrie. Weitere Varianten der genannten Geometrien sind dabei auch als erfindungsgemäß anzusehen, solange sich zumindest ein Kernabschnitt zum Aufbringen von zumindest zwei Wicklungen eignet.

In einer besonders vorteilhaften Ausgestaltung ist innerhalb der Kerngeometrie zumindest ein magnetischer Flusspfad parallel zum magnetischen Hauptflusspfad der einzelnen, elektrisch miteinander verbundenen Wicklungen vorhanden, welcher aus einem magnetischen Material besteht. Dabei kann beispielsweise ein stabförmiger Steg oder auch eine viskose Masse in die Kerngeometrie eingebracht werden. Damit kann eine gezielte Führung des Streuflusses der jeweiligen Wicklungen erwirkt werden, wodurch ein definierter Koppelfaktor eingestellt werden kann. Dabei kann die Höhe der Kopplung zusätzlich durch das Verhältnis der magnetischen Permeabilitäten des Hauptflusspfades sowie des parallelen Pfades eingestellt werden. Besteht beispielsweise der Hauptflusspfad aus einem Material mit einer niedrigen Permeabilität, beispielsweise einer Eisenpulver-Mischung, dann kann durch die Einbringung von parallelen Pfaden, welche ebenfalls aus einer Eisenpulver-Mischung bestehen, welche dieselbe magnetische Permeabilität aufweist, ein Koppelfaktor von kleiner als 0,5 eingestellt werden. Des Weiteren kann durch Einbringung eines Ferrit-Materials mit einer hohen Permeabilität in den parallelen Pfad ein Koppelfaktor eingestellt werden, der noch wesentlich niedriger liegt, bevorzugt im Bereich zwischen 0 und 0,4. Es ist eine Vielzahl von Abwandlungen denkbar, beispielsweise kann durch die geometrischen Abmessungen wie Länge und Querschnitt der parallelen Pfade ebenfalls Einfluss auf den Koppelfaktor genommen werden. Insbesondere vorteilhaft ist dabei ein Koppelfaktor zwischen den einzelnen Induktivitäten jeweils zwischen 0 und 0,7. Durch diese Ausgestaltung der definierten Kopplung kann der Rippelstrom durch die Induktivitäten sowie der gesamte resultierende Rippelstrom, welcher sich durch die elektrische Verbindung der einzelnen Wicklungen aus der Summe der Rippelströme durch die einzelnen Induktivitäten ergibt, reduziert werden.

In einer anderen Ausführungsform der vorgeschlagenen Vorrichtung sind die einzelnen Wicklungen auf unterschiedlichen Kernabschnitten aufgebracht, sodass diese unterschiedliche magnetische Hauptflusspfade besitzen. Beispielsweise kann als Kerngeometrie erfindungsgemäß eine E-Geometrie mit zumindest 3 Schenkeln verwendet werden, wobei auf jedem Schenkel eine Wicklung aufgebracht wird. Damit kann eine gekoppelte Induktivität für eine Leistungsfaktorkorrektur zum Anschluss an ein dreiphasiges öffentliches Versorgungsnetz mit einem minimal möglichen Volumen realisiert werden. Dabei sind die einzelnen Wicklungen elektrisch nicht miteinander verbunden. Dabei können die einzelnen Halbbrücken bezogen auf die Schaltfrequez sowohl synchron als auch, ähnlich wie bei einer mehrfach-parallelen einphasigen PFC-Schaltung, bezogen auf die Schaltfrequenz phasenversetzt ("interleaved") angesteuert werden. Insbesondere eine zusätzliche interleaved-Ansteuerung der einzelnen Halbbrücken in einer dreiphasigen PFC-Schaltung kann eine weitere, zusätzliche Rippelstrom- sowie Hochfrequenz-Flusskompensation über die magnetische Kopplung der einzelnen Wicklungen erwirken. Weiter ist es aber ebenso möglich, dass zumindest 2 Wicklungen an einem Anschlusspunkt elektrisch miteinander verbunden oder durch eine außerhalb der Vorrichtung befindliche elektronische Schaltung miteinander verbindbar sind, um beispielsweise eine gekoppelte Induktivität für eine aus zumindest 2 parallel geschalteten PFC-Schaltungen, welche interleaved angesteuert werden können, zum Anschluss an eine Phase eines öffentlichen Versorgungsnetzes realisieren zu können. Diese Anwendung ergibt sich insbesondere in einer Vorrichtung zur Leistungsfaktorkorrektur, welche zum Zwecke einer weltweiten Einsetzbarkeit eine Umschaltung von einem 3-phasigen Betrieb auf einen 3-fach-interleaved einphasigen Betrieb mit im Vergleich zum 3-phasigen Betrieb erhöhter Phasenleistung beinhaltet.

Eine günstige Ausführungsform der Vorrichtung weist ein magnetisches Material auf, welches üblicherweise eine sehr hohe magnetische Permeabilität besitzt, beispielsweise Ferrit mit einer Permeabilität von typischerweise Werten zwischen 1000 und 2000, wodurch zur Realisierung einer bestimmten Induktivität eine niedrige Windungszahl ausreicht und folglich ein relatives geringes Magnetfeld resultiert. Dadurch kann die magnetische Flussdichte und folglich die Verlustleistungsdichte auf einem niedrigen Niveau gehalten werden. Weitere mögliche Kernmaterialien im Sinne der Erfindung sind amorphe oder nanokristalline Strukturen, welche noch höhere Permeabilitäten aufweisen.

Eine weiter vorteilhafte Ausführungsform der Vorrichtung nach den vorangegangenen Ansprüchen weist dabei ein magnetisches Material auf, welches eine niedrige Permeabilität besitzt, insbesondere Material, dessen Permeabilität in einem Bereich zwischen 10 und 1000 liegt, beispielsweise eine Eisenpulver-Mischung. Eisenpulver-Mischungen besitzen eine im Vergleich zu Ferrit-Materialien hohe Sättigungsflussdichte sowie eine niedrige magnetische Permeabilität. Damit kann die Bauform weiter reduziert werden, da das magnetische Material durch Verkleinerung des Querschnitts bei gleichbleibendem Fluss unter relativ geringer Änderung der Permeabilität stärker ausgesteuert werden kann. Ein weiterer Vorteil von Eisenpulver-Mischungen bzw. magnetischen Materialien mit niedriger Permeabilität besteht in der Möglichkeit, die erfindungsgemäße Vorrichtung ohne diskrete Luftspalte aufzubauen, was zu weniger Streueffekten und folglich zu höheren Effizienzen führt. Insbesondere kann die Kerngeometrie unterschiedliche magnetische Materialien aufweisen. Beispielsweise kann für einen oder mehrere Kernabschnitte ein magnetisches Material mit einer geringeren Sättigungsflussdichte und dafür niedrigerer Verlustleistungsdichte, beispielsweise Ferrit, sowie für die restlichen Kernabschnitte ein magnetisches Material mit einer hohen Sättigungsflussdichte, zum Beispiel Eisenpulver, gewählt werden. Damit kann insgesamt die Verlustleistung der Vorrichtung reduziert werden. Ein weiterer Vorteil ergibt sich in einer Kostenreduktion, da Ferritmaterialien üblicherweise günstiger sind als Eisenpulver-Mischungen.

In einer weiteren vorteilhaften Ausgestaltung wird die Vorrichtung durch Wahl der geometrischen Abmessungen, beispielsweise Querschnitte der einzelnen magnetischen Pfade, sowie Wahl der Materialien für die einzelnen Kernabschnitte, beispielsweise Eisenpulver für die Schenkel und Ferrit für die Verbindungspfade zwischen den Schenkeln, so dimensioniert, dass sich eine Kopplung zwischen den einzelnen Induktivitäten ergibt, welche Werte zwischen 0,4 und 0,6 besitzen kann. Ein konkretes Realisierungsbeispiel wird in den Zeichnungen aufgezeigt. Damit kann bei gleichen Windungszahlen aller Wicklungen ein in jedem magnetischen Pfad ungefähr gleicher maximaler magnetischer Fluss erreicht werden. Außerdem wird dadurch erreicht, dass die Kopplungsinduktivitäten zwischen den einzelnen Phasen bei gleichen Windungszahlen in allen Phasen ungefähr gleiche Rippelstromanteile erwirken, welche durch die hochfrequenten Schaltvorgänge der Leistungshalbleiter hervorgerufen werden.

Eine andere günstige Ausführungsform der vorgeschlagenen Vorrichtung weist unterschiedliche Windungszahlen für die einzelnen Wicklungen auf. Insbesondere weist die Ausgestaltung gleiche Windungszahlen für die beiden Außenschenkel auf. Damit kann durch geeignete Wahl der Windungszahlen aller Wicklungen ein in jedem magnetischen Pfad gleicher maximaler magnetischer Fluss erreicht werden. Insbesondere bei einer magnetischen Kopplung zu den anderen Wicklungen, welche Werte unter 0,4 oder über 0,6 aufweist, kann dabei ebenfalls der Rippelstromanteil, der durch die Schaltvorgänge der Halbleiter erzeugt wird, in allen Wicklungen gleich groß gehalten werden, obwohl sich die Windungszahlen der Induktivitäten in den einzelnen Phasen unterscheiden.

In einer weiteren bevorzugten Ausführungsform werden die Wicklungen der einzelnen Speicherinduktivitäten mit zueinander unterschiedlichen Wicklungssinnen aufgebracht. Insbesondere bei elektrisch miteinander verbundenen Wicklungen für parallel geschaltete, interleaved angesteuerte PFC-Schaltungen, kann so eine Rippelstrom-Minimierung erwirkt werden, wodurch die Verlustleistung deutlich gesenkt werden kann.

Die Erfindung wird anhand FIG 1 bis 13 im Folgenden näher erläutert.
FIG 1 zeigt eine typische Leistungsfaktorkorrekturschaltung, welche zum Anschluss an ein dreiphasiges Stromnetz geeignet ist und den Stand der Technik darstellt.
FIG 2 zeigt eine typische Leistungsfaktorkorrekturschaltung, welche zum Anschluss an ein dreiphasiges Stromnetz geeignet ist und die erfindungsgemäße Vorrichtung aufweist.
FIG 3 zeigt eine abgewandelte Leistungsfaktorkorrekturschaltung, welche zum Anschluss an ein dreiphasiges Stromnetz geeignet ist und die erfindungsgemäße Vorrichtung aufweist.
FIG 4 zeigt eine typische Kerngeometrie aus dem Stand der Technik.
FIG 5 zeigt ein erstes Ausführungsbeispiel der vorgeschlagenen Vorrichtung zum dreiphasigen Betrieb einer Leistungsfaktorkorrektur.
FIG 6 zeigt ein zweites Ausführungsbeispiel der vorgeschlagenen Vorrichtung zum dreiphasigen Betrieb einer Leistungsfaktorkorrektur.
FIG 7 zeigt zwei weitere Ausführungsbeispiele der vorgeschlagenen Vorrichtung zum abgewandelten einphasigen interleaved-Betrieb einer Leistungsfaktorkorrektur.
FIG 8 zeigt eine beispielhafte Stromform bei einer Vorrichtung nach dem Stand der Technik.
FIG 9 zeigt einen beispielhaften zeitlichen Verlauf des magnetischen Flusses bei einer Vorrichtung nach dem Stand der Technik.
FIG 10 zeigt eine beispielhafte Stromform bei einer Vorrichtung im Sinne der Erfindung.
FIG 11 zeigt einen beispielhaften zeitlichen Verlauf des magnetischen Flusses bei einer Vorrichtung im Sinne der Erfindung.
FIG 12 zeigt die gleiche Ansicht wie die Figuren 2 und 3, jedoch von einem weiteren Ausführungsbeispiel der Erfindung.
FIG 13 zeigt die gleiche Ansicht wie die Figuren 5 und 6, jedoch mit weiteren Details.

Nachfolgend sind gleiche Komponenten mit denselben Bezugszeichen gekennzeichnet.

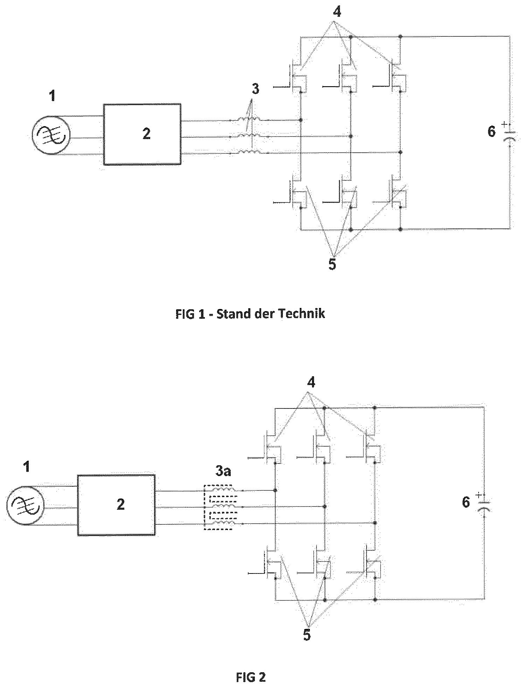

In FIG 1 ist ein Prinzip-Schaltplan einer PFC-Schaltung zum Anschluss an ein dreiphasiges Versorgungsnetz (1) dargestellt, wie sie dem Stand der Technik zu entnehmen ist. Ausgehend vom Anschluss am dreiphasigen Versorgungsnetz (1) befindet sich üblicherweise eine Filterschaltung (2), um die durch die hochfrequenten Schaltvorgänge der aktiven Halbleiter (4, 5) auftretenden Störspannungen zu reduzieren. Anschließend sind pro Phase jeweils die Speicherinduktivitäten (3) am Filter (2) angeschlossen, sowie mit jeweils einer aktiven Halbbrücke (4, 5) verbunden, welche an einen Ausgangskondensator (6) angeschlossen und mit den jeweils anderen beiden Halbbrücken der anderen beiden Phasen verbunden ist. Dabei ist der Ausgangskondensator (6) üblicherweise Teil eines Zwischenkreises in einem elektrischen Betriebsmittel. Üblicherweise sind die Speicherinduktivitäten (3) der einzelnen Phasen als separate, voneinander elektrisch und magnetisch unabhängige Komponenten ausgeführt. Die Steuersignale der aktiven Halbleiter (4, 5) besitzen dabei üblicherweise eine feste Frequenz und eine variable Pulsbreite, welche aus einer Regelstruktur zur Regelung des Phasenstroms vorgegeben wird.

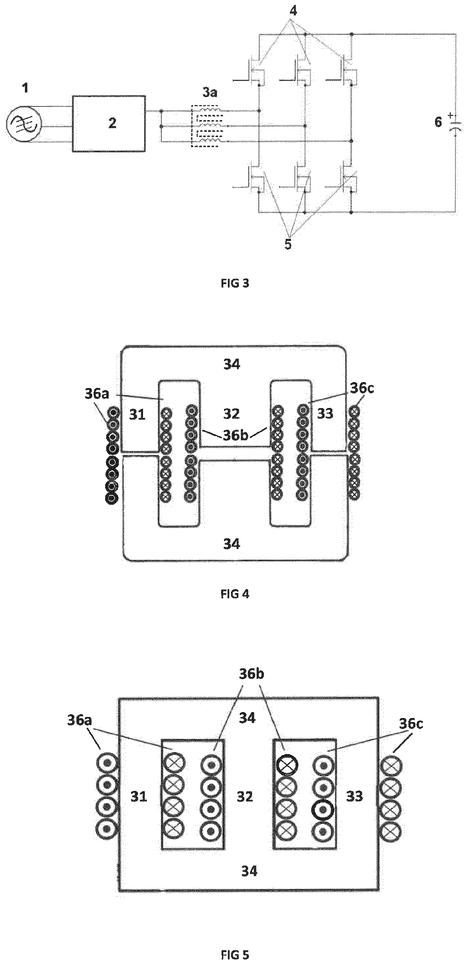

FIG 2 zeigt den Prinzip-Schaltplan einer PFC-Schaltung zum Anschluss an ein dreiphasiges Versorgungsnetz (1), welche die vorgeschlagene Vorrichtung (3a) enthält. Dabei werden die Speicherinduktivitäten der einzelnen Phasen als magnetisch miteinander gekoppelte Komponenten (3a) ausgeführt. Die konkreten Ausführungsformen sind in den FIG 4 - FIG 7 erläutert.

FIG 3 zeigt den Prinzip-Schaltplan einer PFC-Schaltung zum Anschluss an ein dreiphasiges Versorgungsnetz (1), welche die vorgeschlagene Vorrichtung (3a) enthält und welche eine abgewandelte elektrische Verschaltung der Speicherinduktivitäten (3a) an einen gemeinsamen Phasenanschluss aufweist. Damit wird ein einphasiger Betrieb mit erhöhter Leistung ermöglicht, wobei die einzelnen Halbbrücken (4, 5) mit bezogen auf die Schaltfrequenz gegeneinander phasenverschobenen Steuersignalen getaktet werden (sogenannter "interleaved"-Betrieb).

FIG 4 zeigt den Querschnitt einer typischen Kerngeometrie aus dem Stand der Technik, welche beispielsweise unter der Bezeichnung "E" geführt wird. Es sind auch andere Kernbauformen bekannt, welche einen ähnlichen qualitativen Querschnitt aufweisen, beispielsweise "PM" oder "PQ". Allen diesen Bauformen ist die typische Eigenschaft gemeinsam, dass drei Schenkelpfade (31, 32, 33) vorhanden sind, wobei die Aufbringung einer elektrischen Wicklung zur Realisierung einer Induktivität oder eines Transformators über den Innen- bzw. Mittelschenkel (32) erfolgt. Der magnetische Kreis wird über die Querpfade (34), oft auch als Joch bezeichnet, sowie die Außenschenkel (31, 33) geschlossen. Üblicherweise sind die Querschnitte der einzelnen Außenschenkel (31, 33) gleich groß, und der Querschnitt des Mittelschenkels (32) ist deutlich größer als der Querschnitt der Außenschenkel (31, 33). Als Kernmaterial kommt dabei überwiegend Ferrit zum Einsatz, welches eine sehr hohe magnetische Permeabilität besitzt. Zur Realisierung einer bestimmten Induktivität ist deshalb ein Luftspalt notwendig, der entweder bereits während der Herstellung durch Verkürzung des Mittel- bzw. Innenschenkels (32) eingebracht wird, oder durch gleichmäßige Distanzierung von 2 Kernhälften über alle Schenkel realisiert werden kann. Es ist aber auch die Realisierung solcher Kerngeometrien mit einer Eisenpulver-Mischung bekannt, welche durch die Materialzusammensetzung bereits eine relativ niedrige magnetische Permeabilität besitzt, wodurch ein diskreter Luftspalt entfallen kann. Eine erfindungsgemäße Vorrichtung kann bereits mit einer in FIG 4 dargestellten Kerngeometrie aufgebaut werden, indem pro Schenkel (31, 32, 33) eine elektrische Wicklung aufgebracht wird, wie in FIG 4 dargestellt. Durch die bekannte Geometrie, welche einen Querschnitt für den Mittel- bzw. Innenschenkel (32) aufweist, der deutlich größer ist als der Querschnitt der beiden Außenschenkel (31, 33), ergibt sich bei Aufbringung von gleichen Windungszahlen für alle elektrischen Wicklungen (36a, 36b, 36c) für den Mittel- bzw. Innenschenkel (32) eine deutlich höhere Induktivität als für die beiden Außenschenkel (31, 33). Die Windungszahlen für die einzelnen elektrischen Wicklungen (36a, 36b, 36c) können ebenso unterschiedlich gewählt werden, sodass sich ungefähr gleich große Induktivitäten für alle Schenkel (31, 32, 33) ergeben.

FIG 5 stellt eine Abwandlung der Kerngeometrie aus FIG 4 dar, wie sie ebenfalls dem Stand der Technik zu entnehmen ist. Hierbei sind die Querschnitte der einzelnen Schenkel (31, 32, 33) gleich groß. Zusätzlich können auch die Querschnitte der Joche (34) gleich groß sein, sowie größer, kleiner oder gleich groß wie die Querschnitte der einzelnen Schenkel (31, 32, 33). Auch in diesem Ausführungsbeispiel ergibt sich bei Aufbringung von gleichen Windungszahlen für alle elektrischen Wicklungen (36a, 36b, 36c) für den Mittel- bzw. Innenschenkel (32) eine deutlich höhere Induktivität als für die beiden Außenschenkel (31, 33). Die Windungszahlen für die einzelnen elektrischen Wicklungen (36a, 36b, 36c) können ebenso unterschiedlich gewählt werden, sodass sich ungefähr gleich große Induktivitäten für alle Schenkel (31, 32, 33) ergeben.

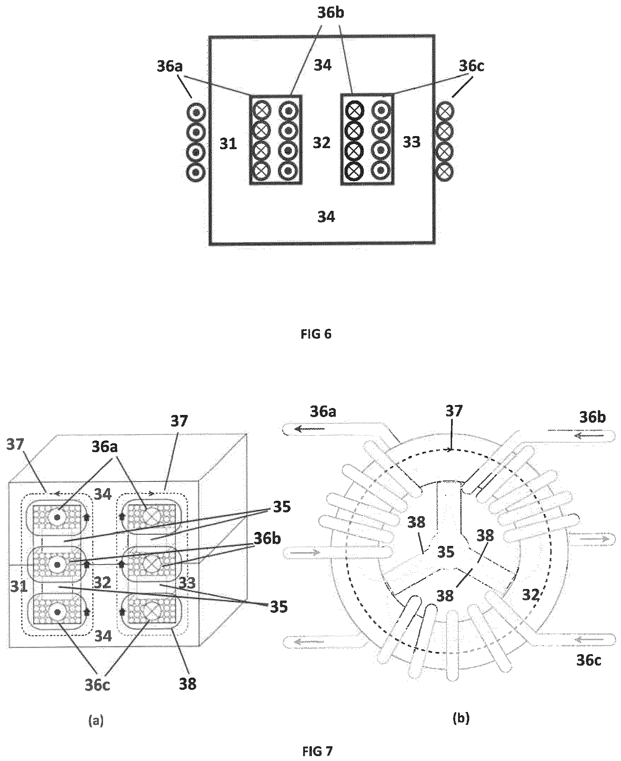

FIG 6 zeigt eine erfindungsgemäße Kernbauform, welche unterschiedliche Materialien aufweist. Die einzelnen Schenkel (31, 32, 33) bestehen aus einem magnetischen Material mit einer niedrigen Permeabilität, beispielsweise einer Eisenpulver-Mischung. Die beiden Querpfade (34) bestehen aus einem magnetischen Material mit einer hohen Permeabilität, beispielsweise Ferrit. Dabei ist die Kernform spiegelsymmetrisch zur Mittenachse. Durch eine solche Kernbauform ergeben sich für alle Kopplungsfaktoren zwischen den einzelnen Wicklungen ungefähr gleich große Werte von 0,5. Weiterhin ergeben sich bei Aufbringung von elektrischen Wicklungen (36a, 36b, 36c) mit gleichen Windungszahlen auf die einzelnen Schenkel (31, 32, 33) ungefähr gleich große Induktivitäten, da die Kernabschnitte mit hoher Permeabilität im Wesentlichen den magnetischen Leitwert bestimmen, welche für alle Wicklungen in gleicher Konfiguration vorhanden sind.

FIG 7 zeigt zwei beispielhafte Ausführungsformen der vorgeschlagenen Vorrichtung, welche für den einphasigen Betrieb einer Leistungsfaktorkorrektur geeignet sind. Hierbei werden 3 elektrische Wicklungen (36a, 36b, 36c) auf einen gemeinsamen magnetischen Pfad (32) aufgebracht, wobei dieser in FIG 7a dem Mittelschenkel in einer E-Geometrie entspricht und in FIG 7b dem Ringkern entspricht. Der sich in dieser Vorrichtung ausbildende Hauptfluss (37) ist mit einer gestrichelten Linie angedeutet, die jeweils den einzelnen Wicklungen zugehörigen Streuflüsse (38) sind mit durchgezogenen Linien gekennzeichnet. Durch Einbringung von zusätzlichen Kernelementen (35) mit einem magnetischen Material, beispielsweise Ferrit oder eine Eisenpulver-Mischung, zwischen die einzelnen elektrischen Wicklungen (36a, 36b, 36c) sowie zwischen den einzelnen Schenkeln (31, 32, 33) kann ein Teil des von jeder Wicklung (36a, 36b, 36c) erzeugten Flusses als Streufluss abgeleitet werden. Die so erzeugte Reduktion der Kopplung zwischen den einzelnen Wicklungen ist dabei durch das Verhältnis der magnetischen Leitwerte des Haupt- (37) und des Streuflusspfades (38) der jeweiligen Wicklungen (36a, 36b, 36c) bestimmt. Somit kann durch Einstellung der Längen und Querschnitte sowie der magnetischen Materialien (und deren Permeabilitäten) der Hauptfluss- (37) sowie Streuflusspfade (38) ein nahezu beliebiger Kopplungsfaktor eingestellt werden. Eine weitere Einstellmöglichkeit ergibt sich durch die definierte Einbringung von Luftspalten zwischen die unterschiedlichen Kernabschnitte mit unterschiedlichen magnetischen Materialien. Dadurch kann insbesondere der magnetische Leitwert des Streuflusspfades (38) reduziert werden. Durch die Zusammenfügung der unterschiedlichen Kernmaterialien ist ohnehin eine geringe Luftspaltbildung durch Unebenheiten in den Oberflächen, Lackierungen zur Verhinderung von Rostbildung, Fertigungstoleranzen usw. nicht ganz zu vermeiden, sodass dieser produktionsbedingte Luftspalt in vorteilhafter Weise zu einer erfindungsgemäßen Ausführungsform der Vorrichtung beiträgt.

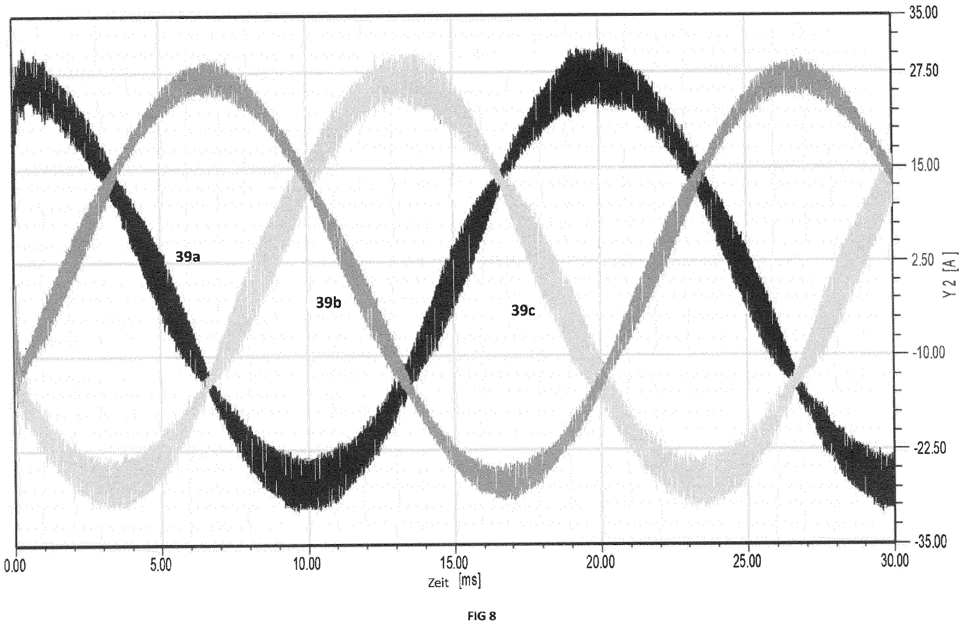

FIG 8 zeigt die zeitlichen Stromformen (39a, 39b, 39c), welche sich ergeben, wenn eine Vorrichtung zur dreiphasigen Leistungsfaktorkorrektur mit gekoppelten Induktivitäten nach dem Stand der Technik realisiert wird, indem eine bekannte Kerngeometrie nach FIG 5 sowie gleiche Windungszahlen für alle Wicklungen (36a, 36b, 36c) gewählt werden. Die resultierenden Rippelanteile sind in der Stromform (39b) für die Wicklung (36b) des Mittelschenkels (32) kleiner als die Rippelanteile der anderen beiden Stromformen (39a, 39c), welche in den anderen beiden Wicklungen (36a, 36c) auftreten. Eine solche unterschiedliche Stromform, insbesondere die hochfrequenten Rippelanteile, sind nachteilig für eine Regelung, insbesondere die Messwerterfassung durch Abtastung und -verarbeitung in einer digitalen Regelplattform, beispielsweise Mikrocontroller, programmierbare Logik (FPGA) oder Digitaler Signalprozessor (DSP), da dadurch unterschiedlich große Fehlerwertbildungen für die Regelung resultieren und somit für die einzelnen Phasen ein erhöhter Regelaufwand durch unterschiedliche Regelparameter sowie unterschiedliche Regelgenauigkeiten durch die begrenzte Anzahl an Abtastwerten in den digitalen Bausteinen entstehen.

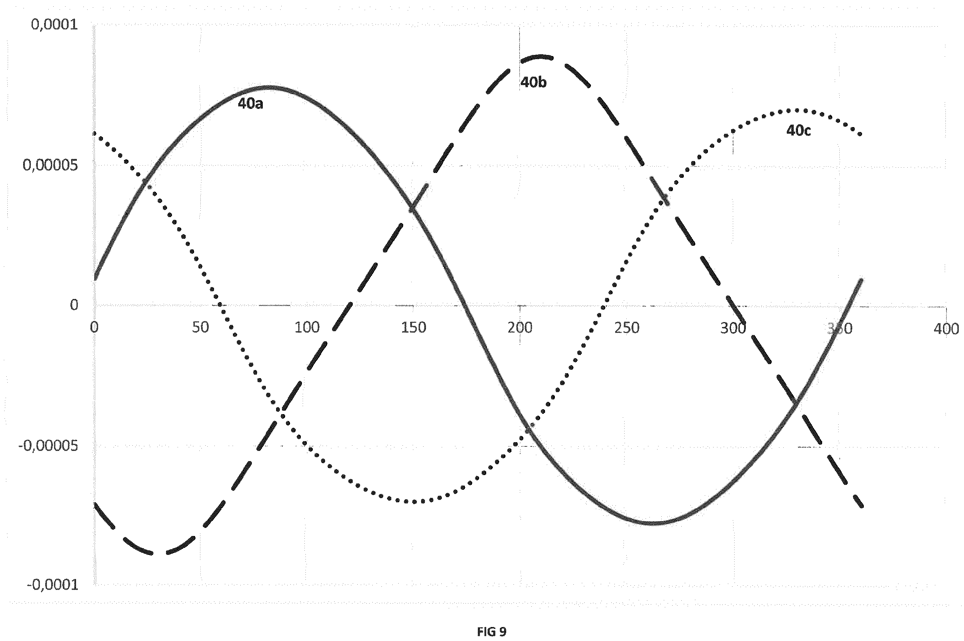

In FIG 9 ist der resultierende zeitliche Verlauf der magnetischen Flüsse (40a, 40b, 40c) in den einzelnen Schenkeln (31, 32, 33) dargestellt, der sich in der zu FIG 8 beschriebenen Vorrichtung nach dem Stand der Technik ergibt. Es sind unterschiedliche Amplituden in den einzelnen Schenkeln vorhanden, welche zu einer unterschiedlichen magnetischen Aussteuerung der unterschiedlichen Kernabschnitte (31, 32, 33, 34) führen und, bedingt durch die Flussabhängigkeit der magnetischen Permeabilität, dadurch zu erhöhtem Stromrippel sowie ungleichmäßiger Verlustleistungsentwicklung innerhalb einer Kerngeometrie führen. Um dies auszugleichen, muss die bekannte Vorrichtung aus FIG 5 derart modifiziert werden, dass sich gleiche Flussdichten in den einzelnen Schenkeln (31, 32, 33) ergeben. Dies erfordert im einfachsten Fall eine Veränderung des Querschnitts des Mittel- bzw. Innenschenkels (32). Dadurch werden die magnetischen Leitwerte sowie daraus folgend, die Induktivitäten, welche durch die einzelnen elektrischen Wicklungen (36a, 36b, 36c) erzeugt werden, verändert, was zu veränderten Kopplungsfaktoren und dementsprechend Rippelstromanteilen führt. Durch erfindungsgemäße Veränderung der Windungszahlen für eine Wicklung, beispielsweise für den Mittel- bzw. Innenschenkel (32 bzw. 36b), kann dann zumindest der Rippelstromanteil in allen Wicklungen ungefähr gleich groß gehalten werden, jedoch ist eine gleichmäßige Flussaufteilung nur durch Wahl der geometrischen Abmessungen derart möglich, dass sich gleiche Koppelfaktoren von ungefähr 0,5 ergeben.

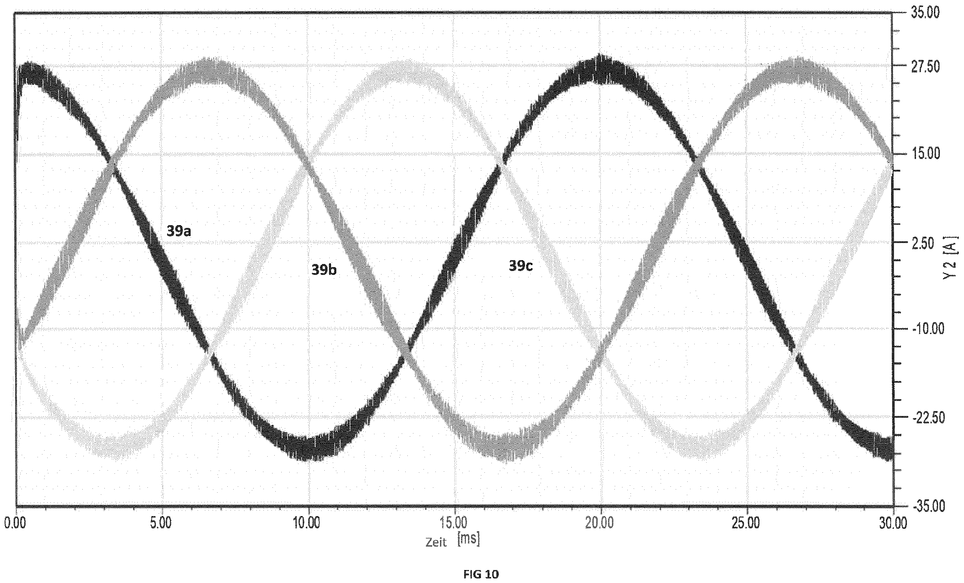

FIG 10 zeigt die zeitlichen Stromformen (39a, 39b, 39c), welche sich ergeben, wenn eine Vorrichtung zur dreiphasigen Leistungsfaktorkorrektur mit gekoppelten Induktivitäten im Sinne der Erfindung realisiert wird, indem eine Kernbauform nach FIG 6 mit gleichen Windungszahlen für die einzelnen Wicklungen (36a, 36b, 36c) gewählt wird. Durch die Wahl eines hochpermeablen Kernmaterials für die Querpfade (34) jeder Wicklung (36a, 36b, 36c) und Wahl eines niederpermeablen Kernmaterials für die einzelnen Schenkel (31, 32, 33) ergeben sich ungefähr gleiche Koppelfaktoren zwischen den einzelnen Induktivitäten von etwa 0,5. Dadurch ergeben sich die in FIG 10 dargestellten zeitlichen Stromformen (39a, 39b, 39c), welche nun gleiche Rippelstromanteile aufweisen. Dies hat einen vorteilhaften Einfluss auf die Regelung, da sich nun eine für alle Ströme der einzelnen Induktivitäten gleiche Fehlerwertbildung ergibt, welche wiederum gleiche Regelparameter und ungefähr gleiche Regelgenauigkeiten für alle Ströme der einzelnen Induktivitäten ergibt.

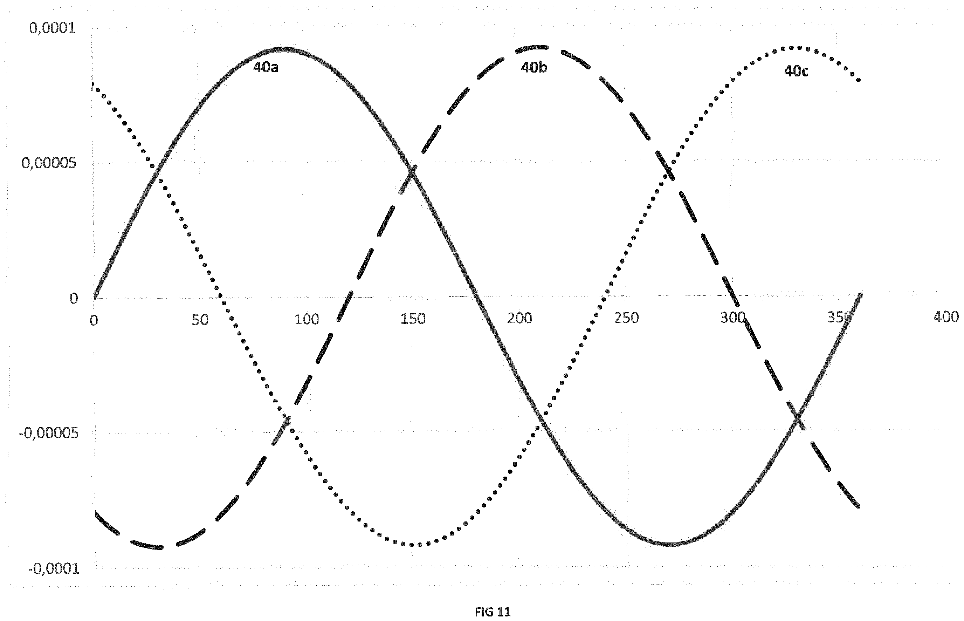

In FIG 11 ist der resultierende zeitliche Verlauf der magnetischen Flüsse (40a, 40b, 40c) in den einzelnen Schenkeln (31, 32, 33) dargestellt, der sich in der zu FIG 9 beschriebenen erfindungsgemäßen Vorrichtung ergibt. Es sind gleiche Amplituden in den einzelnen Schenkeln (31, 32, 33) vorhanden. Dadurch kann für jeden Schenkel (31, 32, 33) derselbe Querschnitt sowie für die zugehörigen elektrischen Wicklungen (36a, 36b, 36c) dieselben Windungszahlen gewählt werden, was zu einer einfachen Produktionsmöglichkeit der vorgeschlagenen Vorrichtung führt.

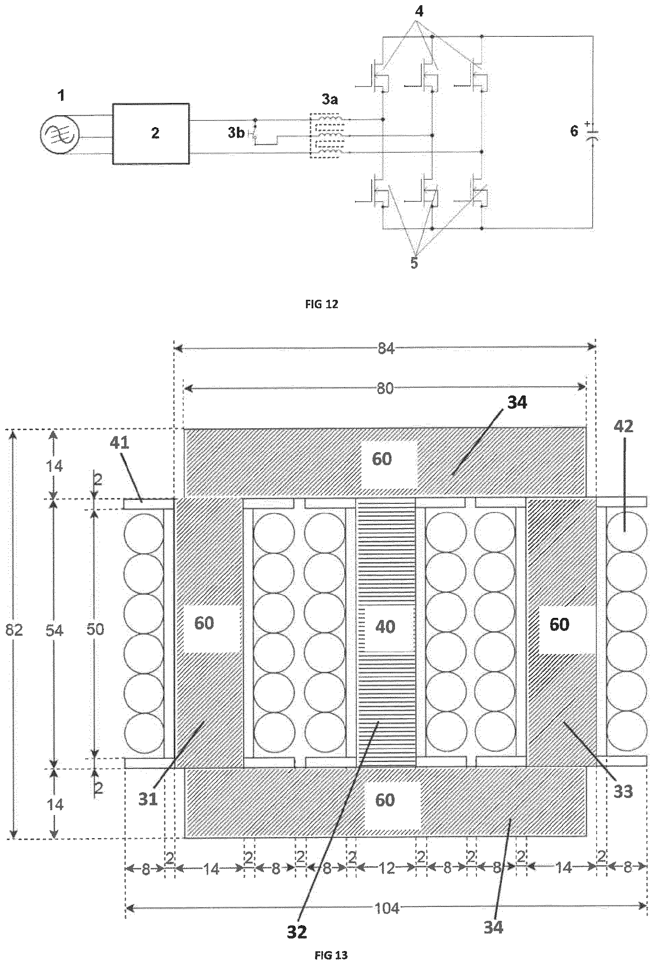

Im Unterschied zu dem Ausführungsbeispiel nach FIG 2 ist bei dem Ausführungsbeispiel nach FIG 12 ein Schalter (3b) vorgesehen. Damit zeigen die Figuren 2, 3 und 12 Ausführungsbeispiele der Erfindung für den Betrieb mit unterschiedlichen Anzahlen von Phasen. Insbesondere kann die erfindungsgemäße Leistungsfaktorkorrekturschaltung, die unter anderem für den dreiphasigen Anschluss vorgesehen ist, auch für den einphasigen Betrieb genutzt werden, wobei durch geeignete Zusammenschaltung ein sogenannter "interleaved"-Betrieb ermöglicht wird, der reduzierte Rippelströme am Netzanschluss und Effizienzvorteile im Vergleich zu einer herkömmlichen einsträngigen Schaltung besitzt.

In den Ansprüchen 3 und 13 ist von zumindest teilweise überlappenden Pfaden bzw. von parallelen Pfaden die Rede. Zur Erläuterung wird auf die Figuren 7(a) und 7(b) verwiesen. Darin bezeichnet die Bezugszahl (35) ein zusätzliches Kernelement bzw. einen oder mehrere Kernabschnitte, welche einen magnetischen Pfad (38) ermöglichen, der teilweise parallel zum und teilweise überlappend mit dem Hauptflusspfad (37) liegt.

Einzelheiten des Betriebs der erfindungsgemäßen Leistungsfaktorkorrekturschaltung sind im Folgenden unter Bezugnahme auf die Figuren 2, 3 und 12 erläutert:
Die sechs Anschlüsse der Drossel sind nicht direkt miteinander verbunden. Im Dreiphasenbetrieb werden die Netzströme über die Halbleiter-Schaltelemente (4, 5) beeinflusst. Dabei kommt es in jeder Arbeitsperiode der Schaltung vor, dass die Drosselanschlüsse, welche mit den Halbleiter-Schaltelementen verbunden sind, kurzzeitig während der Einschaltzeiten der einzelnen Halbleiter-Schaltelemente (< 100 µs) miteinander verbunden sind. Der Schalter (3b) in FIG 12 ist hierbei stets geöffnet. Im einphasigen interleaved-Betrieb werden zwei der drei linken Anschlüsse der Drosseln dauerhaft über den Schalter (3b) verbunden, indem der Schalter (3b) dauerhaft geschlossen ist. Die Ströme werden ebenfalls über die Halbleiter-Schaltelemente (4, 5) der Transistorbrücke beeinflusst. Es können natürlich auch über einen weiteren Schalter alle drei linken Anschlüsse dauerhaft verbunden sein. Diese Version ist in FIG 3 gezeigt, wobei auf die Darstellung der weiteren Schalter verzichtet wurde.

Die "Phasenverschiebung" im einphasigen Betrieb bezeichnet dabei eine zeitliche Differenz zwischen den Steuersignalen der drei Halbbrücken, wobei die Pulsbreite sowie die Frequenz aller Steuersignale gleich ist.

Bei dem Ausführungsbeispiel nach FIG 2 folgen die Steuersignale der einzelnen Halbbrücken einem in diesem Falle üblichen Schema, z.B. einer Zeigermodulation. Dabei ist die Pulsbreite der Steuersignale nicht gleich.

Die Ausführungsformen nach den Figuren 5 und 6 unterscheiden sich insbesondere dadurch, dass im Gegensatz zu der Ausführungsform nach FIG 5 diejenige nach FIG 6 einen Kern mit mindestens zwei unterschiedlichen Materialien aufweist.

FIG 13 zeigt Einzelheiten eines erfindungsgemäßen Ausführungsbeispiels. Dabei sind die geometrischen Abmessungen durch entsprechend Pfeile und Zahlen, welche als Millimeter-Angaben zu verstehen sind, dargestellt. Die unterschiedlich schraffierten Kernelemente weisen unterschiedliche magnetische Materialien mit den angegebenen Permeabilitäten (40 bzw. 60) auf. Der Mittelschenkel (32) hat damit eine Permeabilität, die im Bereich von 30% bis 80% der Permeabilität der Außenschenkel (31, 33) sowie der Joche (34) liegt. Die Permeabilität der Außenschenkel und Joche (31, 33, 34) liegt mit einem Wert von 60 im Bereich von 16 bis 300. Die Dicke der dargestellten Kerngeometrie beträgt für dieses Ausführungsbeispiel 44 Millimeter. Die durch Kreise dargestellten Leiter (42) sind jeweils um ein Kernelement gewickelt, wobei alle drei Wicklungen in dem dargestellten Ausführungsbeispiel jeweils 25 Windungen enthalten; die Anzahl der Kreise in der Darstellung in FIG13 ist aus Darstellungsgründen geringer. Zusätzlich ist eine weitere dünne Schicht (41) mit einer Dicke von jeweils 2 Millimetern dargestellt, welche jeweils zwischen einer Wicklung und dem jeweiligen Kernelement vorhanden ist, auf dem die Wicklung aufgebracht ist. Diese dünne Schicht (41) stellt einen Spulenkörper dar, auf dem die Wicklung aufgebracht wird und durch den ein Kernelement geschoben werden kann. Eine solche Anordnung ist aus produktionstechnischen Gründen vorteilhaft, dabei ist insbesondere durch die Erhöhung der Schichtdicke eine Reduktion der parasitären Kapazitäten zwischen den Wicklungen und dem Kern möglich, was einen günstigen Einfluss auf die elektromagnetischen Störaussendungen der Leistungsfaktorkorrektur hat.

Bei den in den Figuren 7(a) und 7(b) gezeigten Ausführungsbeispielen handelt es sich um Realisierungen mit parallel geschalteten Induktivitäten. Die Wicklungen 36a, 36b, 36c werden durch Punkt bzw. Kreuz in FIG 7(a) bzw. durch Pfeile in FIG 7(b) dargestellt, was der Stromflussrichtung entsprechen soll. Die zugehörige elektrische Verschaltung der einzelnen Wicklungen ist in den Figuren 3 und 12 (mit Schalter 3b) beispielhaft gezeigt. In FIG 3 sind die Wicklungen miteinander verbunden, während sie in FIG 12 durch eine zusätzliche elektronische Schaltung (Schalter 3b) miteinander verbindbar sind.

Die Ausführungsbeispiele nach den Figuren 7(a) und 7(b) beziehen sich jeweils auf die Variante "elektrisch miteinander verbunden" und sind geeignet für den einphasigen interleaved-Betrieb.

Im Folgenden werden Definitionen für in der obigen Beschreibung verwendete Begriffe angegeben:
"Kernabschnitt" ist ein Teil eines Kerns, der keine Verzweigungen enthält und somit für den magnetischen Fluss eine eindeutige Richtung vorgibt.

Der durch den Stromfluss in einer Wicklung erzeugte magnetische Fluss fließt gemäß den physikalischen Gesetzen in eine bestimmte Richtung, welche den magnetischen Feldlinien entspricht. Die Flussrichtung wird als "Pfad" bezeichnet.

Der "Hauptflusspfad" ist definiert als eine komplette geschlossene Feldlinie, die durch Kernabschnitte verläuft, auf denen die Erzeugerwicklung sowie zumindest eine weitere Wicklung aufgebracht sind.

"Streuflusspfad" steht für eine komplette geschlossene Feldlinie, welche nur durch einen Kernabschnitt verläuft, auf dem die Erzeugerwicklung aufgebracht ist. Die Kernabschnitte, auf denen andere Wicklungen aufgebracht sind, werden nicht durch die erwähnte Feldlinie durchsetzt.

Ein "gemeinsamer magnetischer Pfad" ist ein Kernabschnitt, welcher von unterschiedlichen magnetischen Flüssen durchsetzt wird, die durch unterschiedliche Wicklungen erzeugt werden.

"Parallele magnetische Pfade" sind diejenigen Kernabschnitte, welche einen gemeinsamen Anfangs- und Endpunkt haben, so dass sich ein magnetischer Fluss am Anfangspunkt auf die einzelnen Kernabschnitte aufteilt und am Endpunkt wieder zusammenfügt.

Mit "Permeabilität" ist jeweils die einheitslose relative Permeabilität bezeichnet.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: öffentliches elektrisches Versorgungsnetz
- 2: Filternetzwerk
- 3: Speicherinduktivität
- 3a: gekoppelte Speicherinduktivitäten
- 3b: Schaltelement
- 4: Halbleiter-Schaltelement, High-Side
- 5: Halbleiter-Schaltelement, Low-Side
- 6: Zwischenkreis-Gleichspannungs-Kapazität
- 31: Außenschenkel
- 32: Mittel- bzw. Innenschenkel
- 33: Außenschenkel
- 34: Querpfad / Joch
- 35: zusätzliches Kernelement
- 36a, 36b, 36c: elektrische Wicklungen
- 37: Hauptflusspfad
- 38: Streuflusspfad
- 39a, 39b, 39c: zeitliche Stromformen der einzelnen elektrischen Wicklungen
- 40a, 40b, 40c: zeitliche Verläufe der magnetischen Flüsse in den Schenkeln (31, 32, 33)
- 41: Spulenkörper
- 42: elektrischer Leiter

## Patentansprüche

1. Leistungsfaktorkorrekturschaltung mit Speicherinduktivitäten, **dadurch gekennzeichnet, dass** zumindest drei elektrische Leiter (42) um einen gemeinsamen magnetischen Kern (31 bis 34) gewickelt sind, um jeweils eine Speicherinduktivität auszubilden.

2. Leistungsfaktorkorrekturschaltung nach Anspruch 1, **dadurch gekennzeichnet, dass** zumindest 2 der Wicklungen (36a, 36b, 36c) an einem elektrischen Anschluss elektrisch miteinander verbunden oder durch eine zusätzliche elektronische Schaltung miteinander verbindbar und auf einem gemeinsamen Kernabschnitt (32) aufgebracht sind, sodass sie einen gemeinsamen magnetischen Hauptflusspfad (37) besitzen.

3. Leistungsfaktorkorrekturschaltung nach Anspruch 2, **dadurch gekennzeichnet, dass** zumindest teilweise überlappend mit dem magnetischen Hauptflusspfad (37) der einzelnen, elektrisch miteinander verbundenen Wicklungen (36a, 36b, 36c) zumindest ein magnetischer Pfad (35, 38) vorhanden ist, welcher durch ein magnetisches Material verläuft.

4. Leistungsfaktorkorrekturschaltung nach Anspruch 1, **dadurch gekennzeichnet, dass** die einzelnen Wicklungen (36a, 36b, 36c) jeweils auf unterschiedlichen Kernabschnitten (31; 32; 33) aufgebracht sind, sodass sie unterschiedliche magnetische Hauptflusspfade (37) besitzen, wobei die einzelnen Wicklungen entweder elektrisch nicht miteinander verbunden sind oder zumindest 2 Wicklungen an zumindest einem elektrischen Anschluss elektrisch miteinander verbunden oder durch eine zusätzliche elektronische Schaltung miteinander verbindbar sind.

5. Leistungsfaktorkorrekturschaltung nach einem der vorangehenden Ansprüche, **dadurch gekennzeichnet, dass** der Kern zumindest 2 Kernabschnitte mit unterschiedlichen Permeabilitäten aufweist.

6. Leistungsfaktorkorrekturschaltung nach Anspruch 5, wobei der Wert der niedrigsten Permeabilität 30% bis 80% des Wertes der höchsten Permeabilität beträgt.

7. Leistungsfaktorkorrekturschaltung nach Anspruch 5 oder 6, **dadurch gekennzeichnet, dass** die niedrigste Permeabilität 10 bis 1000, bevorzugt 16 bis 300, und/oder die höchste Permeabilität 1000 bis 2000 beträgt.

8. Leistungsfaktorkorrekturschaltung nach einem der vorangehenden Ansprüche, **dadurch gekennzeichnet, dass** durch die geometrischen Abmessungen und Materialbeschaffenheiten der einzelnen Kernabschnitte (31 bis 33), auf die die Wicklungen (36a, 36b, 36c) gewickelt sind, eine magnetische Kopplung zwischen den einzelnen Speicherinduktivitäten vorhanden ist, welche jeweils Werte zwischen 0,4 und 0,6 besitzt.

9. Leistungsfaktorkorrekturschaltung nach einem der vorangehenden Ansprüche, **dadurch gekennzeichnet, dass** die einzelnen Wicklungen (36a, 36b, 36c) unterschiedliche Windungszahlen aufweisen.

10. Leistungsfaktorkorrekturschaltung nach einem der vorangehenden Ansprüche, **dadurch gekennzeichnet, dass** die einzelnen Wicklungen (36a, 36b, 36c) zueinander unterschiedliche Wicklungssinne besitzen.

11. Vorrichtung zur magnetischen Kopplung der Speicherinduktivitäten einer Leistungsfaktorkorrekturschaltung, **dadurch gekennzeichnet, dass** zumindest drei elektrische Leiter (36a, 36b, 36c) um eine gemeinsame magnetische Kerngeometrie gewickelt sind, um jeweils eine Induktivität auszubilden.

12. Vorrichtung nach Anspruch 11, **dadurch gekennzeichnet, dass** zumindest 2 Wicklungen an einem elektrischen Anschluss elektrisch miteinander verbunden oder durch eine außerhalb der Vorrichtung befindliche elektronische Schaltung miteinander verbindbar und auf einem gemeinsamen Kernabschnitt aufgebracht sind, sodass sie einen gemeinsamen magnetischen Hauptflusspfad (37) besitzen.

13. Vorrichtung nach Anspruch 12, **dadurch gekennzeichnet, dass** parallel zum magnetischen Hauptflusspfad (37) der einzelnen, elektrisch miteinander verbundenen Wicklungen zumindest ein magnetischer Pfad (35, 38) vorhanden ist, welcher aus einem magnetischen Material besteht.

14. Vorrichtung nach Anspruch 11, **dadurch gekennzeichnet, dass** die einzelnen Wicklungen (36a, 36b, 36c) jeweils auf unterschiedlichen Kernabschnitten aufgebracht sind, sodass sie unterschiedliche magnetische Hauptflusspfade (37) besitzen, wobei die einzelnen Wicklungen entweder elektrisch nicht miteinander verbunden sind oder zumindest 2 Wicklungen an zumindest einem elektrischen Anschluss elektrisch miteinander verbunden oder durch eine außerhalb der Vorrichtung befindliche elektronische Schaltung miteinander verbindbar sind.

15. Vorrichtung nach Anspruch 14, **dadurch gekennzeichnet, dass** die Kerngeometrie ein magnetisches Material mit einer hohen Permeabilität aufweist.

16. Vorrichtung nach einem der Ansprüche 12, 14 oder 15, **dadurch gekennzeichnet, dass** die Kerngeometrie ein magnetisches Material mit einer niedrigen Permeabilität aufweist.

17. Vorrichtung nach einem der Ansprüche 14 bis 16, **dadurch gekennzeichnet, dass** durch die geometrischen Abmessungen und Materialbeschaffenheiten der einzelnen magnetischen Pfade (31, 32, 33, 34) eine magnetische Kopplung zwischen den einzelnen Induktivitäten vorhanden ist, welche jeweils Werte zwischen 0,4 und 0,6 besitzt.

18. Vorrichtung nach einem der Ansprüche 11 bis 17, **dadurch gekennzeichnet, dass** die einzelnen Wicklungen (36a, 36b, 36c) unterschiedliche Windungszahlen aufweisen.

19. Vorrichtung nach einem der Ansprüche 11 bis 18, **dadurch gekennzeichnet, dass** die einzelnen Wicklungen (36a, 36b, 36c) zueinander unterschiedliche Wicklungssinne besitzen.
